Europäisches Patentamt

European Patent Office

Office européen des brevets

(19)

(11) Veröffentlichungsnummer : **0 047 396**
B1

## (12) EUROPÄISCHE PATENTSCHRIFT

(45) Veröffentlichungstag der Patentschrift :
13.06.84

(21) Anmeldenummer : 81106094.6

(22) Anmeldetag : 04.08.81

(51) Int. Cl.³ : **A 01 N 25/04**, A 01 N 39/02,
A 01 N 39/04

(54) Lagerstabile, konzentrierte Emulsion von herbizid wirkenden Phenoxyalkancarbonsäureestern und ein Verfahren zu deren Herstellung.

(30) Priorität : 04.09.80 DE 3033335

(43) Veröffentlichungstag der Anmeldung :
17.03.82 Patentblatt 82/11

(45) Bekanntmachung des Hinweises auf die Patenterteilung : 13.06.84 Patentblatt 84/24

(84) Benannte Vertragsstaaten :
AT BE CH DE FR IT LI LU NL SE

(56) Entgegenhaltungen :
EP-A- 0 006 348
GB-A- 1 164 321
US-A- 3 189 430

(73) Patentinhaber : **CHEMIE LINZ AKTIENGESELL-SCHAFT**
**St. Peter-Strasse 25**
**A-4020 Linz (AT)**
**BE CH FR IT LI LU NL SE AT**
**Lentia Gesellschaft mit beschränkter Haftung**
**Arabellastrasse 4 Postfach 81 05 08**
**D-8000 München 81 (DE)**
**DE**

(72) Erfinder : **Leitner, Harald, Dr.**
**Kirchstetten 19**
**D-4064 Oftering (DE)**
Erfinder : **Leiss, Kurt**
**Franckstrasse 7c**
**A-4020 Linz (AT)**

0 047 396

**Beschreibung**

Die Erfindung betrifft eine lagerstabile, konzentrierte Emulsion von einem oder mehreren herbizid wirkenden Phenoxyalkancarbonsäureestern auf wäßriger Basis sowie ein Verfahren zu deren Herstellung.

Phenoxyalkancarbonsäuren gehören zu den gebräuchlichsten Herbiziden. Sie werden in Form ihrer Aminsalze, Mineralsalze oder auch als Ester, wie z. B. Isopropyl-, Butyl-, Butylglycol- oder 2-Äthylhexylester angewendet. Der Vorteil der Ester besteht darin, daß sie schneller in die Pflanze eindringen und daher ihre Anwendung weniger witterungsabhängig ist. Ihre Löslichkeit in Wasser ist gering, sie sind jedoch in Ölen, wie Dieselöl, Kerosin, Petroläther, Xylolen, Cyclohexanon, Isophoron oder hochraffinierten Kohlenwasserstoffen löslich. Überlicherweise wird der Ester in einem solchen Lösungsmittel gelöst, die Lösung mit einem Emulgator versetzt, wodurch eine konzentrierte, klare, emulgierbare Lösung (Emulsionskonzentrat, EC) entsteht, die zur Anwendung auf dem Feld mit Wasser verdünnt wird, wodurch eine Öl-in-Wasser-Emulsion entsteht.

Laut AT-PS 307 802 ist es auch möglich, zur Lagerung von Pestiziden eine hochviskose Formulierung, bestehend aus Wirkstoff, Mineralöl, Wasser und Formulierungshilfsmitteln, vom Typ Öl-in-Wasser herzustellen, die für die Applikation kurz vor dem Gebrauch durch einen Zusatz, bestehend aus Lösungsmittel und Dispergator zu einer leicht flüssigen Wasser-in-Öl-Dispersion invertiert wird : « Inverse Emulsion ».

Beide Formulierungsarten, das üblicherweise verwendete Emulsionskonzentrat und die hochviskose Dispersion, besitzen jedoch schwerwiegende Nachteile, deren Ursachen von dem verwendeten Lösungsmittel herrühren. Alle hiefür üblicherweise verwendeten Lösungsmittel sind wie die meisten organischen Lösungsmittel zumindest gesundheitsschadlich, aber vor allem brennbar. So haben hochgereinigte, hauptsächlich aliphatische Kohlenwasserstoffe einen Flammpunkt von 40 bis 80 °C, Isophoron hat einen Flammpunkt von 93 °C, Cyclohexanon einen Flammpunkt von 44 °C und die am häufigsten verwendeten Xylole haben einen Flammpunkt von nur ca. 25 °C.

Damit sind auch die mit Hilfe dieser Lösungsmittel hergestellten Emulsionskonzentrate brennbar, und es ist in der Vergangenheit schon mehrfach zu Lagerbränden sowohl beim Hersteller als auch beim Anwender gekommen.

EP-A-0006348 beschreibt drei Gruppen von oberflächenaktiven Mitteln, die, miteinander vermischt, unter Zusatz eines organischen Lösungsmittels, mit Insektiziden, Insektenrepellents, Herbiziden, Fungiziden, Akariziden, Nematoziden, Molluskiziden, Rodentiziden und ähnlichem zu emulgierbaren Konzentraten, Spritzpulvern, « Flowables » oder als Zusatz zu Flüssigdüngern formuliert werden können. Solche Kompositionen von oberflächenaktiven Mitteln, sogenannte « blends », sollen auf möglichst viele der bekannten Wirkstoffe anwendbar sein, spezielle Probleme, wie die Lagerstabilität oder Brennbarkeit von Phenoxyester-Formulierungen, oder Phenoxyester selbst sind nicht erwähnt.

Demgegenüber konnte gefunden werden, daß es unter Verwendung bestimmter Hilfsmittel möglich ist, eine lagerstabile, hochkonzentrierte Emulsion von Herbizidestern herzustellen, die auf wäßriger Basis aufgebaut ist, und daher nicht brennbar und vom Lösungsmittel her nicht gesundheitsschädlich ist. Die Möglichkeit der Verwendung eines wäßrigen Mediums zur Herstellung von lagerstabilen Emulsionen von Phenoxyestern ist überraschend, da Phenoxyester an sich in Wasser zu einem, wenn auch geringen Teil löslich sind und daher verseift werden können.

Gegenstand der vorliegenden Erfindung ist demnach eine lagerstabile, konzentrierte Emulsion von einem oder mehreren herbizid wirkenden Phenoxyalkancarbonsäureestern auf wäßriger Basis unter Verwendung eines öllöslichen Emulgators und eines wasserlöslichen Dispergators, die dadurch gekennzeichnet ist, daß sie einen oder mehrere in den Estern lösliche Emulgatoren in einer Menge von 1,01-11,1 Gew. Teilen pro 100 Teilen Ester mit einem HLB-Wert von 9-16 aus der Gruppe der Fettsäurepolyäthylenglycolester, der Polyäthylenglycoläther von Fettalkoholen, von Glyceriden oder von Alkylphenolen, Polyoxyäthylen- und Polyoxypropylenblockpolymere, Mischungen dieser Polyäthylenglycolester, Polyäthylenglycoläther oder Polyäthylenglycol-polypropylenglycol-Blockpolymere mit Alkylarylsulfonaten sowie einen oder mehrere ionische oder nichtionische wasserlösliche Dispergatoren aus der Gruppe der phosphatierten Alkylarylpolyäthylenoxide oder der Äthylenoxid-Kondensate an Fettamin gegebenenfalls zusammen mit üblichen Kälteschutz- und/oder üblichen Antischäummitteln enthält, wobei der Wirkstoffgehalt der konzentrierten Emulsion 30-75 Gew.%, die Viskosität 50-3 000 mPa · s, die Tropfengröße 1-5 μm und der pH-Wert 4-10 beträgt.

Die erfindungsgemäße, hochkonzentrierte Emulsion wird durch Vermischen der einzelnen Reaktionspartner oder durch Vermischen von 2 Lösungen hergestellt : Lösung I enthält den oder die Phenoxyester und einen in den Estern löslichen Emulgator, Lösung II enthält einen in Wasser gelösten Dispergator sowie gegebenenfalls Frostschutzmittel, Verdickungsmittel, Entschäumungsmittel oder Farbstoffe.

Die in den Phenoxyestern löslichen, also fettlöslichen Emulgatoren, bewirken die Verteilung des Wirkstoffes in der äußeren Phase. Beispiele für solche Emulgatoren mit einem HLB-Wert (« hydrophillipophil-balance ») von 9 bis 16 sind : Fettsäurepolyäthylenglycolester, die Polyäthylenglycoläther von Fettalkoholen, von Mono- oder Diglyceriden und von Alkylphenolen, weiters Polyäthylenglycol-polypropylenglycol-Blockpolymere. Die Emulgatoren können allein, in Mischung untereinander oder in Mi-

2

0 047 396

schung mit Ammonium-, Ca-, Mg-, K-, Na- und Zn-Salzen von Alkyl($C_8$-$C_{24}$) benzolsulfonsäuren verwendet werden. Besonders geeignet sind Fettsäurepolyäthylenglycolester oder Polyoxyäthylen-Polyoxypropylenblockpolymere zusammen mit Alkylarylsulfonaten.

In der Lösung I liegen die fettlöslichen Emulgatoren in einer Konzentration von 1 bis 10 Gew. Teilen vor, das sind 1,01-11,1 Gew. Teile Emulgator pro 100 Gew. Teile Ester, wobei der Bereich von 2 bis 4 Gew. Teilen pro 100 Teile Lösung I besonders bevorzugt ist. In der konzentrierten, lagerfähigen Emulsion liegen die Emulgatoren meist in einer Menge von 0,5-5 Gew.%, insbesondere in einer solchen von 1-2 Gew.% vor.

Der wasserlösliche Dispergator stabilisiert die Verteilung der inneren Phase, z. B. durch elektrostatische Aufladung der Teilen oder durch andere, eine Abstoßung hervorrufende Kräfte, wie z. B. sterische Hinderung. Er kann ebenfalls ionisch oder nichtionisch, vorzugsweise jedoch anionisch und hochmolekular sein. Beispiele für wasserlösliche ionische Dispergatoren sind : Phosphatierte Alkylarylpolyäthylenoxide, insbesondere phosphoryliertes Nonylphenylpolyäthylenoxid mit einem Äthylenoxidanteil von 2 bis 20 Molen Äthylenoxid, bzw. deren Salze. Weiter die Ammonium-, Na-, K-Salze von phosphoryliertem Polystyrylphenyl-polyäthylenoxid. Beispiele für nichtionische Dispergatoren sind Äthylenoxid-Kondensate an Fettamin. Besonders geeignete Dispergatoren sind phosphatierte Alkylarylpolyäthylenoxide.

In der Lösung II liegt der wasserlösliche Dispergator üblicherweise in einer Konzentration von 0,5 bis 5 Gew. Teilen vor, wobei der Bereich von 1 bis 3 Gew. Teilen pro 100 Teile Lösung II besonders bevorzugt ist. Die Dispergatorkonzentration in der konzentrierten, lagerfähigen Emulsion beträgt meist 0,2-4 Gew.%, vorzugsweise 0,4-2 Gew.%.

Die Herstellung der lagerstabilen Emulsionen erfolgt gewöhnlich so, daß eine wäßrige Lösung II eines Dispergators, die gegebenenfalls Frostschutzmittel, Entschäummittel oder Verdickungsmittel enthält, vorgelegt wird, und der oder die flüssigen Phenoxyester, welche den Emulgator gelöst enthalten, als Lösung I eingerührt werden, sodaß eine homogene Mischung entsteht. Dieses Einrühren erfolgt mit Geräten, die in der Emulsion ein Schergeschwindigkeitsgefälle zwischen $10^2$ und $10^4$ sec$^{-1}$ erzeugen. Dies entspricht bei hoher Viskosität (3 000 mPa·s) Schubspannungen von $3 \cdot 10^2$ bis $3 \cdot 10^4$ Pa, wofür sich Geräte wie Homorex oder Ultra-Turrax eignen. Bei niedriger Viskosität (50 mPa·s) entspricht dies Schubspannungen von 5 bis 500 Pa, wofür sich Geräte wie Vibratoren, niedertourige Mixer, Kreiselpumpen und ähnliche Geräte eignen. Da die Viskosität mit höherer Temperatur abnimmt, ist es möglich, bei Anwendung höherer Temperatur, etwa von 50 bis 90 °C auch niedertourige Geräte zu verwenden. Dabie soll eine homogene Tropfenverteilung mit Tropfengrößen von 1 bis 5 μm, vorzugsweise von 2 bis 3 μm, entstehen, wobei aber neben der Größe der einzelnen Tropfen auch deren möglichst enge Verteilung bei gleichzeitig niederer Viskosität der Emulsion von Bedeutung ist.

Die Viskosität der konzentrierten Emulsion ist ein wesentlicher Faktor für die Lagerstabilität. Je höher die Viskosität, umso besser ist die Lagerstabilität, andererseits ist eine zu hohe Viskosität jedoch ungünstig für die Verdünnbarkeit mit Wasser und die Spontandispergierbarkeit bei der Anwendung. Mit Hilfe der erfindungsgemäß hergestellten konzentrierten Emulsion ist es möglich, in einem Viskositätsbereich von 50 bis 3 000 mPa·s stabile und zugleich noch leicht verdünnbare Zubereitungen herzustellen. Die besten Ergebnisse bezüglich Verdünnbarket und Spontandispergierbarkeit einerseits und Stabilität andererseits werden bei Viskositäten zwischen 500 und 1 500 mPa·s erhalten.

Wesentlich für die Herstellung einer stabilen Emulsion ist weiters auch die Einstellung des pH-Wertes. Für jede Kombination von Wirkstoff/Emulgator/Dispergator gibt es einen optimalen pH-Wert, bei dem die Emulsion am stabilsten ist. Diese physikalische Stabilität ist im alkalischen Bereich am besten, doch sind pH-Werte von über 10 zu vermeiden, da in diesem Bereich bei langer Lagerung und erhöhter Temperatur eventuell bereits eine partielle Verseifung des Esters beginnen könnte. Im sauren Medium sind pH-Werte von unter 3 zu vermeiden, da es in diesem Bereich nach längerer Lagerzeit zu Koaleszenz kommen kann, die Emulsion also zunehmend physikalisch instabil wird. Bevorzugt ist ein pH-Bereich von 6,5 bis 9, insbesondere von 7,5 bis 8,5.

Zur Herstellung des erfindungsgemäßen Mittels eignen sich alle herbizid wirksamen Phenoxyalkancarbonsäureester allein oder als Gemische untereinander, insbesondere die Ester mit einer Alkoholkettenlänge von $C_4$-$C_8$, wie z. B. die Octylester der CMPP-, MCPA- oder 2,4,5-T-Säuren.

Herbizid wirksame Phenoxyalkancarbonsäureester sind beispielsweise die Ester folgender Säuren :

| | |
|---|---|
| 2-(2,4-Dichlorphenoxy)-propionsäure : | 2,4-DP-Säure |
| (2,4-Dichlorphenoxy)-essigsäure : | 2,4-D-Säure |
| (2,4,5-Trichlorphenoxy)-essigsäure : | 2,4,5-T-Säure |
| (4-Chlor-2-methylphenoxy)-essigsäure : | MCPA-Säure |
| 2(4-Chlor-2-methylphenoxy)-propionsäure : | CMPP-Säure. |

Da technische Phenoxyalkansäureester aufgrund ihres Herstellungsverfahrens üblicherweise einen pH-Wert von etwa 3 (gemessen als 10 %ige wäßrige Dispersion) aufweisen, wird der gewünschte pH mit Hilfe einer üblichen Lauge, wie z. B. NaOH oder KOH eingestellt. Die Einstellung des gewünschten pH-Wertes kann während oder nach Herstellung der Emulsion erfolgen, es ist jedoch auch möglich, gereinigte, « neutrale » Ester zu verwenden, wodurch sich das Nachstellen des pH-Wertes erübrigt.

3

Um eine ausreichende Kältestabilität zu gewährleisten, können den Emulsionen die üblichen Frostschutzmittel, wie Äthylenglycol, Glycerin, Harnstoff, Glycoläther oder andere Alkohole zugesetzt werden. Weiters ist es möglich, bekannte anorganische oder organische Verdickungsmittel, wie z. B. Xanthangummi, Natriumpolyacrylat, Carboxymethylcellulose, kolloidale Kieselsäure oder quellende Tonmineralien, wie Bentonit, zuzusetzen, um eine bestimmte Viskosität einzustellen. Zur Verminderung der Schaumbildung können Entschäummittel, wie langkettige Alkohole, 2-Äthylhexanol oder Cetylalkohol, hochpolymere Glycole und vor allem Silikone beigefügt werden.

Zur Anwendung auf dem Feld werden die erfindungsgemäß hergestellten, konzentrierten Emulsionen genau wie die bisher üblichen brennbaren Emulsionskonzentrate mit Wasser verdünnt und können mit den selben Spritzgeräten appliziert werden.

Die folgenden Beispiele beschreiben die Herstellung sowie die chemische und physikalische Stabilität der erfindungsgemäßen Mittel. Die verwendeten technischen Phenoxyalkancarbonsäureester entsprechen den von der WHO empfohlenen Richtlinien. Die Stabilität wurde in einem Lagerversuch überprüft, bei dem ein 24-Stunden-Temperaturwechsel zwischen −10 °C und + 50 °C eingehalten wurde. Nach einer Lagerung über einen Zeitraum von 4 Wochen wurde gemessen :

1. Änderung des pH-Wertes.
2. Verbrauch von 0,01 n NaOH Lösung, um den Anfangs-pH wieder herzustellen.
3. Viskositätsänderung (gemessen am Brookfield-LVT-Viskosimeter, Spindel 2,6 rpm, in den Beispielen 3, 13, 17, 18 mit Spindel 1,6 rpm).
4. Änderung des Trübungswertes einer 0,01 %igen Emulsion, korreliert mit der Veränderung der Tropfengröße (gemessen mit einem Lange-Trübungsmesser in 100 ml-Küvetten).
5. Überstehende Flüssigkeit in %.
6. Koaleszenz (Entstehen einer öligen Phase).
7. Reemulgierbarkeit.

Die zu den Beispielen gehörenden Meßergebnisse wurden in einer Tabelle zusammengefaßt. Aus den Meßergebnissen geht hervor, daß in keinem der angeführten Beispiele nach einer Lagerzeit von 4 Wochen bei einem 24-Stunden-Temperaturwechsel zwischen −10 °C und + 50 °C die Änderungen in 1, 2, 3, 4 und 5 mehr als 10 % betrug. Es trat keine Koaleszenz auf und ein eventuell vorhandener, nicht koaleszierter Bodensatz war vollständig reemulgierbar.

## Beispiel 1

Lösung I

700 g 2,4,5-T-Äthylhexylester techn. (entspr. WHO-Spezifikation)
20 g Polyoxyäthylentriglycerid und Alkylarylsulfonat, biologisch abbaubar

Lösung II

22,7 g phosphatiertes Nonylphenylpolyäthylenoxid (3 bis 14 Mole Äthylenoxid = ÄO), pH = 4,5 bis 5.
100 g Äthylenglycol
877,0 g destilliertes Wasser
3,0 g nichtionogene Siliconemulsion

200 ml der Lösung II wurden vorgelegt und Lösung I mit Hilfe eines Homorex-Mixers eingerührt. Nach Ende der Zugabe wurde 10 Minuten auf höchster Stufe weitergerührt, dann mit halbnormaler NaOH-Lösung auf pH = 7,25 eingestellt, mit Lösung II auf 1 000 g aufgefüllt und nochmals kurz nachgerührt.

## Beispiel 2

Lösung I

700 g 2,4,5-Äthylhexylester techn. (entspr. WHO-Spezifikation)
20 g Polyoxyäthylentriglycerid und Alkylarylsulfonat, biologisch abbaubar

Lösung II

22,7 g phosphatiertes Nonylphenylpolyäthylenoxid (3 bis 14 Mole ÄO), pH = 6,5
100 g Äthylenglycol
877,0 g destilliertes Wasser
3,0 g nichtionogene Siliconemulsion

Die Durchführung erfolgte wie in Beispiel 1 beschrieben. Es wurde ein pH-Wert von 7,4 eingestellt.

## Beispiel 3

Lösung I

600 g MCPA-Äthylhexylester techn.
20 g Fettalkoholpolyglykoläthyer $[C_{14}H_{29}O\text{-}(CH_2\text{---}CH_2O)_{8\text{-}10}H]$

Lösung II

886,1 g destilliertes Wasser
98,5 g Äthylenglycol
15,4 g phosphatiertes Nonylphenylpolyäthylenoxid mit NaOH neutralisiert.

Die Durchführung erfolgte wie in Beispiel 1 beschrieben. Es wurde ein pH-Wert von 7,15 eingestellt.

## Beispiel 4

Lösung I

636,4 g 2,4,5-T-Äthylhexylester techn.
18,2 g Fettsäurepolyglycolester

Lösung II

21,0 g phosphatiertes Nonylphenylpolyäthylenoxid (3 bis 14 Mole ÄO), pH = 6,5
91 g Äthylenglycol
800 g destiliertes Wasser
1,8 g nichtionogene Siliconemulsion.

Die Durchführung erfolgte wie in Beispiel 1 beschrieben. Es wurde ein pH-Wert von 6,85 eingestellt.

## Beispiel 5

Lösung I

668,4 g 2,4,5-T-Äthylhexylester techn.
19,0 g Mischung aus Nonylphenylpolyäthylenoxid, Polyoxyäthylen-polyoxypropylen-blockpolymerisat (Molgew. 1 800 bis 9 000) und Alkylarylsulfonat

Lösung II

22,0 g phosphatiertes Nonylphenylpolyäthylenoxid (3 bis 14 Mole ÄO), pH = 4,5 bis 5
95,0 g Äthylenglycol
840 g destilliertes Wasser
3 g nichtionogene Siliconemulsion

Die Durchführung erfolgte wie in Beispiel 1 beschrieben. Es wurde ein pH-Wert von 6,90 eingestellt.

## Beispiel 6

Zusammensetzung der Stammlösungen wie in Beispiel 1, die zur Neutralisation benötigte NaOH wurde jedoch mit Lösung II vorgelegt, pH = 7,60.

## Beispiel 7

Lösung I

667 g 2,4-DP-Äthylhexylester techn. (entspr. WHO-Spezifikation)
19 g Fettsäurepolyglycolester

Lösung II

383 g destilliertes Wasser

95  g Äthylenglycol
19,0 g phosphatiertes Nonylphenylpolyäthlenoxid (3 bis 14 Mole ÄO), pH = 4,5 bis 5.
3,0 g nichtionogene Siliconemulsion

20 ml der Lösung II wurden vorgelegt und 72 g der Lösung I mit Hilfe eines hochtourigen Mixers (Ultra Turrax) eingerührt. Die Mischung erwärmte sich dabei auf ca. 60 °C. Nach 5 minütigem Rühren wurde mit halbnormaler NaOH-Lösung auf pH = 7,50 eingestellt, mit Lösung II auf 100 g aufgefüllt und nochmals kurz durchgerührt.

Beispiel 8

Lösung I

667 g 2,4-DP-Äthylhexylester techn.
19 g Fettsäurepolyglycolester

Lösung II

383  g destilliertes Wasser
95  g Äthylenglycol
19,0 g Äthylenoxid-Kondensat an Fettamin (9 bis 11 Mole ÄO)
3,0 g nichtionogene Siliconemulsion

Die Durchführung erfolgte wie in Beispiel 7 beschrieben. Es wurde ein pH-Wert von 7,55 eingestellt.

Beispiel 9

Lösung I

655  g MCPA-Äthylhexylester techn.
18,8 g Fettsäurepolyglycolester

Lösung II

823  g destilliertes Wasser
94  g Äthylenglycol
20,0 g phosphatiertes Nonylphenylpolyäthylenoxid (3 bis 14 Mole ÄO), pH = 6,5
3,0 g nichtionogene Siliconemulsion

200 ml Lösung II wurden in einem Mixer (Starmix) vorgelegt und Lösung I langsam eingerührt, sodaß eine einheitliche Emulsion entstand. Das Gemisch wurde auf 70 °C erwärmt, und mittels einer Kreiselpumpe im kontinuierlichen Durchfluß mit ca. 50 ml/min. homogenisiert. Anschließend erfolgte die Neutralisation mit halbnormaler NaOH-Lösung und das Auffüllen mit Lösung II auf 1 000 g. Die Emulsion zeigte einen pH-Wert von 7,40.

Beispiel 10

Lösung I

650,2 g CMPP-Butylglycolester gereinigt
18,6 g Fettsäurepolyglycolester

Lösung II

19 g phosphatiertes Nonylphenylpolyäthylenoxid (3 bis 14 Mole ÄO), pH = 4,5 bis 5.
93 g Äthylenglycol
817 g destilliertes Wasser
3 g nichtionogene Siliconemulsion

Die Durchführung erfolgte wie in Beispiel 7. Die Reinigung des CMPP-Butylglycolesters wurde durch Ausrühren einer ätherischen Lösung des Estes mit $NaHCO_3$-Lösung und anschließender Destillation vorgenommen. Die Emulsion zeigte einen pH-Wert von 6,85.

Beispiel 11

Lösung I

650,2 g CMPP-Butylglycolester gereinigt
18,6 g Fettsäurepolyglycolester

Lösung II

19 g Äthylenoxid-Kondensat in Fettamin (9 bis 11 Mole ÄO)
93 g Äthylenglycol
817 g destilliertes Wasser
3 g nichtionogene Siliconemulsion

Die Durchführung erfolgte wie in Beispiel 10. Es wurde ein pH-Wert von 8,30 eingestellt.

Beispiel 12

Lösung I

700 g CMPP-Äthylhexylester, gereinigt wie in Beispiel 10
10 g Polyoxyäthylentriglycerid und Alkylarylsulfonat

Lösung II

881,7 g destilliertes Wasser
100   g Äthylenglycol
20   g Äthylenoxid-Kondensat at Fettamin (9 bis 11 Mole ÄO)
3,0 g nichtionogene Siliconemulsion

Die Emulsion wurde analog Beispiel 10 hergestellt, es stellte sich ein pH-Wert von 9,50 ein.

Beispiel 13

Lösung I

250 g 2,4-D-i-Propylester techn.
250 g MCPA-Äthylhexylester techn.
20 g Fettsäurepolyglycolester

Lösung II

20 g phosphatiertes Nonylphenylpolyäthylenoxid (3 bis 14 Mole ÄO), pH = 6,5
100 g Äthylenglycol
880 g destilliertes Wasser
3 g nichtionogene Siliconemulsion

Die Durchführung erfolgte wie in Beispiel 1 beschrieben. Es wurde ein pH-Wert von 7,5 eingestellt.

Beispiel 14

Lösung I

700 g 2,4,5-T-Äthylhexylester techn.
20 g Polyoxyäthylentriglycerid und Alkylarylsulfonat, biologisch abbaubar

Lösung II

22,7 g phosphatiertes Nonylphenylpolyäthylenoxid (3 bis 14 Mole ÄO), pH = 6,5
100   g Harnstoff
877,0 g destilliertes Wasser
3,0 g nichtionogene Siliconemulsion

Die Duchführung erfolgte wie in Beispiel 1 beschrieben. Es wurde ein pH-Wert von 7,15 eingestellt.

Beispiel 15

Lösung I

700 g 2,4-DP-Äthylhexylester techn.

20 g Mischung aus Nonylphenylpolyäthylenoxid, Polyoxyäthylen-polyoxypropylen-blockpolymerisat (Molgewicht 1 800 bis 9 000) und Alkylphenylsulfonat

Lösung II :

881,7 g destilliertes Wasser
100 g Glycerin
20,0 g phosphatiertes Nonylphenylpolyäthylenoxid (3 bis 14 Mole ÄO), pH = 2
3,0 g nichtionogene Siliconemulsion

200 ml der Lösung II wurden vorgelegt und Lösung I mit Hilfe eines Homorex-Mixers eingerührt, dann mit halbnormaler NaOH-Lösung auf pH = 7,50 eingestellt, mit Lösung II auf 1 000 g aufgefüllt und nochmals kurz nachgerührt.

Beispiel 16

Lösung I

700 g 2,4-DP-Äthylhexylester techn.

20 g Mischung aus Nonylphenylpolyäthylenoxid, Polyoxyäthylen-polyoxypropylen-blockpolymerisat (Molgewicht 1 800 bis 9 000) und Alkylphenylsulfonat

Lösung II

881,7 g destilliertes Wasser
100 g Glycerin
20 g phosphatiertes Nonylphenylpolyäthylenoxid (3 bis 14 Mole ÄO), pH = 2
3,0 g nichtionogene Siliconemulsion

200 ml der Lösung II wurden vorgelegt und Lösung I mit Hilfe eines Homorex-Mixers eingerührt. Nach Ende der Zugabe wurde 10 Minuten auf höchster Stufe weitergerührt, mit Lösung II auf 1 000 g aufgefüllt und nochmals kurz nachgerührt. Der pH-Wert betrug 4,45.

Beispiel 17

Lösung I

500 g MCPA-Äthylhexylester techn.
20 g Fettsäurepolyglycolester

Lösung II

889 g destilliertes Wasser
199 g Äthylenglycol
25,0 g Äthylenoxid-Kondensat an Fettamin (9 bis 11 Mole ÄO)
3,0 g nichtionogene Siliconemulsion

Die Mischung und Homogenisierung erfolgte wie in Beispiel 1 beschrieben. Es wurde ein pH-Wert von 8,05 eingestellt.

Beispiel 18

Lösung I

400 g MCPA-Äthylhexylester techn.
20 g Fettsäurepolyglycolester

Lösung II

889 g destilliertes Wasser
100 g Äthylenglycol
25,0 g Äthylenoxid-Kondensat an Fettamin (9 bis 11 Mole ÄO)

8

# 0 047 396

3,0 g nichtionogene Siliconemulsion

Die Mischung und Homogenisierung erfolgte wie in Beispiel 1 beschrieben. Es wurde ein pH-Wert von 8,1 eingestellt.

### Beispiel 19

Lösung I

500 g MCPA-Äthylhexylester techn.
20 g Fettsäurepolyglycolester

Lösung II

880 g destilliertes Wasser
100 g Äthylenglycol
10 g Äthylenoxid-Kondensat an Fettamin (9 bis 11 Mole ÄO)
1,5 g nichtionogene Siliconemulsion
80,0 g 2 %ige Lösung von Xanthangummi

400 ml der Lösung II wurden vorgelegt und Lösung I wie bei Beispiel 1 eingerührt, mit halbnormaler NqOH quf pH = 7,80 gestellt und mit Wasser ; Äthylenglycol 9 : 1 aufgefüllt.

### Beispiel 20

Lösung I

400 g MCPA-Äthylhexylester techn.
20 g Fettsäurepolyglycolester

Lösung II

880 g destilliertes Wasser
100 g Äthylenglycol
10 g Äthylenoxid-Kondensat an Fettamin (9 bis 11 Mole ÄO)
1,5 g nichtionogene Siliconemulsion
130 g 2 %ige Lösung von Xanthangummi

Die Durchführung erfolgte wie in Beispiel 18 beschrieben. Es wurde ein pH-Wert von 7,9 eingestellt.

### Beispiel 21

Lösung I

600 g MCPA-äthylhexylester techn.
20 g Nonylphenylpolyäthylenoxid mit 6 bis 10 Molen ÄO

Lösung II

886 g dest. Wasser
98,4 g Äthylenglykol
15,5 g phosphatiertes Nonylphenylpolyäthylenoxid mit NaOH neutralisiert.

Die Durchführung erfolgte wie in Beispiel 1 beschrieben. Es wurde ein pH-Wert von 7,45 eingestellt.

### Beispiel 22

Lösung I

650 g 2,4,D-Butylester
20 g Fettsäurepolyglycolester

Lösung II

897,7 g destilliertes Wasser

9

99,7 g Äthylenglykol
13,9 g phosphatiertes Nonylphenylpolyäthylenoxid mit NaOH neutralisiert.

Die Durchführung erfolgte wie in Beispiel 1 beschrieben. Es wurde ein pH-Wert von 7,13 eingestellt.

(Siehe Tabelle Seite 11 f.)

| Beispiel | Ausgangswerte | | | nach 4 Wochen Lagerung bei -10/+50°C | | | | |
|---|---|---|---|---|---|---|---|---|
| | pH-Wert | Viskosität in mPa.s | Trübungswert | pH-Wert | mg NaOH/g | Viskosität in mPa.s | Trübungswert | % überstehende Flüssigkeit |
| 1 | 7,25 | 2 900 | 91,5 | 6,75 | 0,07 | 2 880 | 91,0 | 0 |
| 2 | 7,40 | 2 800 | 90,0 | 6,95 | 0,04 | 2 690 | 97,5 | 1 |
| 3 | 7,15 | 80* | 82 | 6,90 | 0,1 | 75* | 82,0 | 0 |
| 4 | 6,85 | 490 | 92,0 | 6,60 | 0,05 | 475 | 95,0 | 5 |
| 5 | 6,90 | 1 775 | 82,5 | 6,55 | 0,05 | 1 850 | 75,0 | 2 |
| 6 | 7,60 | 2 225 | 85,5 | 7,20 | 0,03 | 2 010 | 90,0 | 0 |
| 7 | 7,50 | 2 825 | 85,0 | 7,00 | 0,07 | 2 820 | 84,0 | 1 |
| 8 | 7,55 | 240 | 88,0 | 7,50 | 0,01 | 260 | 87,0 | 3 |
| 9 | 7,40 | 700 | 84,5 | 6,70 | 0,10 | 680 | 86,5 | 1 |
| 10 | 6,85 | 725 | 64,0 | 6,60 | 0,02 | 810 | 59,0 | 0 |
| 11 | 8,30 | 116 | 75,0 | 7,50 | 0,06 | 120 | 75,0 | 6 |
| 12 | 9,50 | 960 | 73,0 | 8,55 | 0,10 | 1 050 | 71,0 | 1 |
| 13 | 7,50 | 50* | 72,0 | 7,45 | 0,01 | 50* | 74,0 | 7 |
| 14 | 7,15 | 600 | 79,5 | 8,00 | - | 580 | 76,0 | 1 |
| 15 | 7,50 | 3 000 | 85,5 | 7,30 | 0,02 | 2 980 | 90,0 | 0 |
| 16 | 4,45 | 1 230 | 83,0 | 3,50 | 0,10 | 1 170 | 74,7 | 9 |
| 17 | 8,05 | 125* | 75,0 | 7,35 | 0,05 | 220* | 76,0 | 3 |
| 18 | 8,10 | 75* | 56,0 | 7,50 | 0,07 | 70* | 80,5 | 2 |
| 19 | 7,80 | 450 | 82,5 | 7,80 | - | 455 | 81,5 | 0 |
| 20 | 7,90 | 550 | 73,0 | 7,70 | 0,01 | 525 | 73,0 | 0 |
| 21 | 7,45 | 690 | 86,0 | 7,00 | 0,08 | 675 | 85,0 | 7 |
| 22 | 7,13 | 250 | 87,0 | 6,90 | 0,1 | 250 | 86,0 | 9 |

*) mit Spindel 1 gemessen

0 047 396

## Ansprüche

1. Lagerstabile, konzentrierte Emulsion von einem oder mehreren herbizid wirkenden Phenoxyalkancarbonsäureestern auf wäßriger Basis unter Verwendung eines öllöslichen Emulgators und eines wasserlöslichen Dispergators, dadurch gekennzeichnet, daß sie einen oder mehrere in den Estern lösliche Emulgatoren in einer Menge von 1,01-11,1 Gew. Teilen pro 100 Teilen Ester mit einem HLB-Wert von 9-16 aus der Gruppe der Fettsäurepolyäthylenglycolester, der Polyäthylenglycoläther von Fettalkoholen, von Glyceriden oder von Alkylphenolen, Polyoxyäthylen- und Polyoxypropylenblockpolymere, Mischungen dieser Polyäthylenglycolester, Polyäthylenglycoläther oder Polyäthylenglycol-polypropylenglycol-Blockpolymere mit Alkylarylsulfonaten sowie einen oder mehrere ionische oder nichtionische wasserlösliche Dispergatoren aus der Gruppe der phosphatierten Alkylarylpolyäthylenoxide oder der Äthylenoxid-Kondensate an Fettamin gegebenenfalls zusammen mit üblichen Kälteschutz- und/oder üblichen Antischäummitteln enthält, wobei der Wirkstoffgehalt der konzentrierten Emulsion 30-75 Gew.%, die Viskosität 50-3 000 mPa · s, die Tropfengröße 1-5 μm und der pH-Wert 4-10 beträgt.

2. Lagerstabile, konzentrierte Emulsion nach Anspruch 1, dadurch gekennzeichnet, daß als esterlösliche Emulgatoren Fettsäurepolyäthylenglycolester und als wasserlösliche Dispergatoren phosphatierte Alkylarylpolyäthylenoxide verwendet werden.

3. Lagerstabile, konzentrierte Emulsion nach Anspruch 1, dadurch gekennzeichnet, daß als esterlösliche Emulgatoren Polyäthylenglycol-polypropylenglycol-Blockpolymere zusammen mit Alkylarylsulfonaten und als wasserlösliche Dispergatoren phosphatierte Alkylarylpolyäthylenoxide verwendet werden.

4. Lagerstabile, konzentrierte Emulsion nach den Ansprüchen 1-3, dadurch gekennzeichnet, daß als herbizid wirkende Phenoxyalkancarbonsäureester die Octylester der Phenoxyalkancarbonsäuren verwendet werden.

5. Lagerstabile, konzentrierte Emulsion nach den Ansprüchen 1-4, dadurch gekennzeichnet, daß sie 0,5-5 Gew.% Emulgator enthält.

6. Lagerstabile, konzentrierte Emulsion nach Anspruch 5, dadurch gekennzeichnet, daß sie 1-2 Gew.% Emulgator enthält.

7. Lagerstabile, konzentrierte Emulsion nach den Ansprüchen 1-6, dadurch gekennzeichnet, daß sie 0,2-4 Gew.% Dispergator enthält.

8. Lagerstabile, konzentrierte Emulsion nach Anspruch 7, dadurch gekennzeichnet, daß sie 0,4-2 Gew.% Dispergator enthält.

9. Lagerstabile, konzentrierte Emulsion nach den Ansprüchen 1-8, dadurch gekennzeichnet, daß sie eine Viskosität von 500-1 500 mPa · s aufweist.

10. Lagerstabile, konzentrierte Emulsion nach den Ansprüchen 1-9, dadurch gekennzeichnet, daß die Tropfengröße 2-3 μm beträgt.

11. Verfahren zur Herstellung einer lagerstabilen, konzentrierten Emulsion von herbizid wirkenden Phenoxyalkancarbonsäureestern auf wäßriger Basis unter Verwendung eines öllöslichen Emulgators und eines wasserlöslichen Dispergators nach Anspruch 1, dadurch gekennzeichnet, daß aus einem oder mehreren Phenoxyalkancarbonsäureestern und mindestens einem in dem Ester löslichen ionischen oder nichtionischen Emulgator mit einem HLB-Wert von 9 bis 16 eine Lösung I bereitet wird, wobei auf 100 Gew. Teile dieser Lösung I 1 bis 10 Gew. Teile Emulgator oder Emulgatorgemisch zur Anwendung kommen, diese Lösung mit einer wäßrigen Lösung II, die einen ionischen oder nichtionischen, wasserlöslichen Dispergator und gegebenenfalls ein übliches Kälteschutz- und/oder ein übliches Antischäummittel enthält, wobei auf 100 Teile dieser wäßrigen Lösung II 0,5 bis 5 Gew. Teile Dispergator zur Anwendung kommen, gemischt und auschließend bei Temperaturen von 15 bis 90 °C bis zu einer Tropfengröße von 1 bis 5 μm homogenisiert und vor oder nach der Homogenisierung nötigenfalls der pH-Wert der Mischung auf Werte zwischen 4 und 10 eingestellt wird, worauf das Homogenisat auf das gewünschte Endvolumen verdünnt wird.

## Claims

1. A storage-stable, concentrated, water-based emulsion of one or more herbicidally active phenoxyalkanecarboxylic acid esters, employing an oil-soluble emulsifier and a water-soluble dispersant, characterised in that the emulsion contains, in an amount of 1.01-11.1 parts by weight per 100 parts of ester, one or more emulsifiers which are soluble in the esters, have an HLB value of 9-16 and are from the group comprising fatty acid polyethylene glycol esters, polyethylene glycol ethers of fatty alcohols, of glycerides or of alkylphenols, polyoxyethylene and polyoxypropylene block polymers, mixtures of these polyethylene glycol esters, polyethylene glycol ether or polyethylene glycol-polypropylene glycol block polymers with alkylaryl sulphonates, as well as one or more ionic or non-ionic water-soluble dispersants from the group comprising phosphated alkylaryl polyethylene oxides and ethylene oxide condensates with fatty amines, if appropriate together with a conventional anti-freeze and/or a conventional anti-foam, and the concentrated emulsion contains 30-75 % by weight of active compound, the viscosity is 50-3,000 mPa · s, the droplet size is 1-5 μm and the pH is 4-10.

0 047 396

2. A storage-stable, concentrated emulsion according to Claim 1, characterised in that fatty acid polyethylene glycol esters are used as the ester-soluble emulsifiers, and phosphated alkylaryl polyethylene oxides are used as the water-soluble dispersants.

3. A storage-stable, concentrated emulsion according to Claim 1, characterised in that polyethylene glycolpolypropylene glycol block polymers together with alkylaryl sulphonates are used as the ester-soluble emulsifiers, and phosphated alkylaryl polyethylene oxides are used as the water-soluble dispersants.

4. A storage-stable, concentrated emulsion according to Claims 1 to 3, characterised in that an octyl phenoxyalkanecarboxylate is used as the herbicidally active phenoxyalkanecarboxylic acid ester.

5. A storage-stable, concentrated emulsion according to Claims 1 to 4, characterised in that it contains 0.5-5 % by weight of emulsifier.

6. A storage-stable, concentrated emulsion according to Claim 5, characterised in that it contains 1-2 % by weight of an emulsifier.

7. A storage-stable, concentrated emulsion according to Claims 1 to 6, characterised in that it contains 0.2-4 % by weight of dispersant.

8. A storage-stable, concentrated emulsion according to Claim 7, characterised in that it contains 0.4-2 % by weight of dispersant.

9. A storage-stable, concentrated emulsion according to Claims 1 to 8, characterised in that it has a viscosity of 500-1,500 mPa · s.

10. A storage-stable, concentrated emulsion according to Claims 1 to 9, characterised in that the droplet size is 2-3 µm.

11. A process for the preparation of a storage-stable, concentrated, water-based emulsion of herbicidally active phenoxyalkanecarboxylic acid esters, employing an oil-soluble emulsifier and a water-soluble dispersant, according to Claim 1, characterised in that a solution I is prepared from one or more phenoxyalkanecarboxylic acid esters and at least one ionic or non-ionic emulsifier which is soluble in the ester and has an HLB value of 9 to 16, 1 to 10 parts by weight of emulsifier or emulsifier mixture being employed per 100 parts by weight of this solution I, and this solution is mixed with an aqueous solution II, which contains an ionic or non-ionic, water-soluble dispersant and, if appropriate, a conventional anti-freeze and/or a conventional anti-foam, 0.5 to 5 parts by weight of dispersant being employed for 100 parts of this aqueous solution II, after which the mixture is homogenised at temperatures of 15 to 90 °C until the droplet size is 1 to 5 µm, the pH of the mixture being adjusted, if necessary, to values of between 4 and 10 either before or after homogenisation, and the homogenisate is then diluted to the desired final volume.

**Revendications**

1. Emulsion concentrée stable à l'entreposage d'un ou plusieurs esters d'acides phénoxyalcanecarboxyliques ayant un effet herbicide à base aqueuse, utilisant un émulsionnant soluble dans l'huile et un agent dispersant soluble dans l'eau, caractérisée en ce qu'elle contient un ou plusieurs émulsionnants solubles dans les esters, selon une quantité allant de 1,01 à 11,1 parties en poids pour 100 parties d'ester, avec un coefficient d'équilibre hydrophile-lipophile de 9 à 16, choisis dans le groupe comprenant les esters de polyéthylèneglycol d'acides gras, les éthers de polyéthylèneglycol d'alcools gras, de glycérides ou d'alcoylphénols, les polymères à blocs de polyoxyéthylène et polyoxypropylène, des mélanges de ces esters de polyéthylèneglycol, éthers de polyéthylèneglycol ou polymères à blocs de polyéthylèneglycol-polypropylèneglycol avec des alcoylarylsulfonates, ainsi qu'un ou plusieurs agents dispersants solubles dans l'eau ioniques ou non ioniques, choisis dans le groupe comprenant les oxydes d'alcoylarylpolyéthy-lène phosphatés ou les produits de condensation de l'oxyde d'éthylène sur une amine grasse, éventuellement conjointement aux agents usuels de protection contre le froid et/ou aux agents usuels antimoussants, la teneur en substance active de l'émulsion concentrée représentant de 30 à 75 % en poids, la viscosité allant de 50 à 3 000 mPa · s, la grosseur de gouttelettes étant de 1 à 5 µm et le pH étant compris entre 4 et 10.

2. Emulsion concentrée stable à l'entreposage suivant la revendication 1, caractérisée en ce qu'on utilise, comme émulsionnants solubles dans les esters, des esters de polyéthylèneglycol d'acides gras, et comme agents dispersants solubles dans l'eau, des oxydes d'alcoylarylpolyéthylène phosphatés.

3. Emulsion concentrée stable à l'entreposage suivant la revendication 1, caractérisée en ce qu'on utilise, comme émulsionnants solubles dans les esters, des polymères à blocs de polyéthylèneglycol-polypropylèneglycol conjointement à des alcoylarylsulfonates et, comme agents dispersants solubles dans l'eau, des oxydes d'alcoylarylpolyéthylène phosphatés.

4. Emulsion concentrée stable à l'entreposage suivant les revendications 1 à 3, caractérisée en ce qu'on utilise, comme esters d'acides phénoxyalcanecarboxyliques à effet herbicide, les esters octyliques des acides phénoxyalcanecarboxyliques.

5. Emulsion concentrée stable à l'entreposage suivant les revendications 1 à 4, caractérisée en ce qu'elle renferme de 0,5 à 5 % en poids d'émulsionnant.

6. Emulsion concentrée stable à l'entreposage suivant la revendication 5, caractérisée en ce qu'elle renferme de 1 à 2 % en poids d'émulsionnant.

13

7. Emulsion concentrée stable à l'entreposage suivant les revendications 1 à 6, caractérisée en ce qu'elle renferme de 0,2 à 4 % en poids d'agent dispersant.

8. Emulsion concentrée stable à l'entreposage suivant la revendication 7, caractérisée en ce qu'elle renferme de 0,4 à 2 % en poids d'agent dispersant.

9. Emulsion concentrée stable à l'entreposage suivant les revendications 1 à 8, caractérisée en ce qu'elle a une viscosité allant de 500 à 1 500 mPa · s.

10. Emulsion concentrée stable à l'entreposage suivant les revendications 1 à 9, caractérisée en ce que la grosseur des gouttelettes représente de 2 à 3 μm.

11. Procédé pour la préparation d'une émulsion concentrée stable à l'entreposage d'esters d'acides phénoxyalcanecarboxyliques à effet herbicide à base aqueuse, en utilisant un émulsionnant soluble dans l'huile et un agent dispersant soluble dans l'eau suivant la revendication 1, caractérisé en ce qu'on prépare, à partir d'un ou plusieurs esters d'acides phénoxyalcanecarboxyliques et d'au moins un émulsionnant ionique ou non ionique soluble dans l'ester, ayant un coefficient d'équilibre hydrophile-lipophile de 9 à 16, une solution I, en utilisant pour 100 parties en poids de cette solution I de 1 à 10 parties en poids d'émulsionnant ou de mélange d'émulsionnants, on mélange cette solution avec une solution aqueuse II qui contient un agent dispersant soluble dans l'eau, ionique ou non ionique, et le cas échéant un agent usuel de protection contre le froid et/ou un agent anti-moussant usuel, en employant pour 100 parties de cette solution aqueuse II de 0,5 à 5 parties en poids d'agent dispersant, puis on homogénéise à des températures de 15 à 90 °C jusqu'à obtenir une grosseur de gouttelettes de 1 à 5 μm, et le cas échéant, avant ou après l'homogénéisation, on règle le pH du mélange à des valeurs comprises entre 4 et 10, après quoi l'homogénéisat est dilué au volume final désiré.